# EUROPÄISCHE PATENTSCHRIFT

(11) **EP 1 389 302 B1**
(45) Veröffentlichungstag und Bekanntmachung des Hinweises auf die Patenterteilung: **15.08.2007**
(21) Anmeldenummer: 02745050.1
(22) Anmeldetag: 08.05.2002
(51) Int. Cl.: G01N 29/00

(54) **VERFAHREN ZUR HERSTELLUNG VON DURCH MALEINSÄUREANHYDRID MODIFIZIERTEN POLYPROPYLENEN**
METHOD FOR PRODUCING POLYPROPYLENES MODIFIED BY MALEIC ACID ANHYDRIDE
PROCEDE POUR PREPARER DES POLYPROPYLENES MODIFIES PAR L'ANHYDRIDE DE L'ACIDE MALEIQUE

(30) Priorität: 16.05.2001 DE 10123825
(43) Veröffentlichungstag der Anmeldung: 18.02.2004
(73) Patentinhaber: Kometra Kunststoff-Modifikatoren und Additiv GmbH, 06429 Neugattersleben (DE)
(72) Erfinder: HÄUSLER, Lutz, 06108 Halle (DE); GERECKE, Jochen, 06122 Halle (DE)
(74) Vertreter: Voigt, Wolf-Rüdiger
(86) Internationale Anmeldenummer: PCT/DE2002/001657
(87) Internationale Veröffentlichungsnummer: WO 2002/093157

(56) Entgegenhaltungen:
- DE-A- 19 914 146
- US-A- 3 414 551
- US-A- 3 932 368
- BORSIG E ET AL: "SOLID-STATE POLYPROPYLENE GRAFTING AS AN EFFECTIVE CHEMICAL METHOD OF MODIFICATION" MACROMOLECULAR SYMPOSIA, WILEY VCH, WEINHEIM, DE, Bd. 176, Nr. 1, 2001, Seiten 289-298, XP001117881 ISSN: 1022-1360

## Beschreibung

Die Erfindung betrifft ein Verfahren zur Herstellung von durch Maleinsäureanhydrid (MSA) modifizierten Polypropylenen mit einem Maleinierungsgrad zwischen 0,1 und 5 Masse-%.

Eine wichtige technische Aufgabe besteht darin, die Verträglichkeit von Polypropylenen gegenüber polaren Kunststoffen, wie Polyamiden, Polyestern, Polyethern, Polysulfonen und anderen, oder mineralischen Füll- und Verstärkungsmitteln, wie Talkum und Glasfasern, zu verbessern oder es als Beschichtungsmaterial bzw. als Haftvermittler für Metall- und andere Oberflächen sowie in Mehrschichtverbunden zu verwenden.

Eine Möglichkeit ist die Modifizierung des Polypropylens mittels Einbau von hydrophile Gruppen besitzenden ungesättigten Verbindungen in die molekulare Polypropylenkette oder besonders ihre Ankopplung an eine durch Radikalübertragung oder energiereiche Strahlung an der Polypropylenkette erzeugte Radikalstelle.

Diese Ankopplung geschieht in der Regel mittels Pfropfung ungesättigter carboxyl-, anhydrid-, hydroxy-, epoxy- oder silangruppenhaltiger Verbindungen auf das Polypropylen-Rückgrat, wobei - unter Berücksichtigung der spezifischen Reaktionskomponenten - verschiedene Pfropftechnologien angewendet werden.

Am bekanntesten sind carboxylierte Polypropylene, erhalten durch "Aufpfropfen" von ungesättigten Mono- und Dicarbonsäuren bzw. ihren Anhydriden, insbesondere von MSA, auf ein Polypropylen-Rückgrat.

Die Maleinierung von geschmolzenem Polypropylen, basierend auf der reaktiven Extrusion einer Mischung aus Polypropylen, MSA, gegebenenfalls einer weiteren monomeren Verbindung, einem radikalbildenden Initiator und gegebenenfalls üblichen Additiven, wie Stabilisatoren, Antioxidantien usw., ist die am häufigsten angewandte Pfropftechnologie (DE 2242324, DE 2326589; US 24555594; US 3177269, US 3987122, US 3987122).

Nachteile der Maleinierung in der Polypropylen-Schmelze sind der geringe MSA-Umsatz und niedrige Funktionalisierungsgrad sowie die bei den hohen Reaktionstemperaturen von etwa 160 bis etwa 250 °C auftretenden toxischen MSA-Dämpfe. Als besonders nachteilig haben sich die für peroxidisch initiierte Maleinierungen bei Temperaturen oberhalb des Polypropylen-Schmelzpunktes auftretende starke Degradation der Polypropylen-Rückgratketten und ihre dadurch bedingten eingeschränkten Einsatz- und Anwendungsmöglichkeiten herausgestellt.

Eine Alternative zur Schmelze-Funktionalisierung stellt die Maleinierung in fester Polypropylen-Phase dar. Unter Festphasen-Maleinierung ist das Ankoppeln von MSA-Molekülen an Radikalstellen an der Polymerkette des Polypropylens, das bei Temperaturen unterhalb seines Schmelz- bzw. Erweichungspunktes, im Bereich zwischen etwa 60 und etwa 160 °C, in fester, zumeist pulveriger, körniger, flockiger, blättchenförmiger oder granularer Form vorliegt, zu verstehen (DD 275159, DD 275160, EP 0519341, WO 00/58379).

DE-A-19911416 beschreibt die Verwendung als Modifikator von durch MSA modifizierten Polypropylenen mit Maleinierungsgraden zwischen 0,1 und 5 Masse-%.

Der Vorteil der Modifizierung in fester Phase liegt gegenüber der Schmelzemodifizierung in der Vermeidung bzw. starker Zurückdrängung des Auftretens toxischer MSA-Dämpfe und anderer flüchtiger Einsatz- und Reaktionsprodukte sowie in der geringeren thermischen Belastung der Polypropylen-Rückgrate und dem dadurch geringeren Polypropylen-Abbau auf Grund der niedrigeren Reaktionstemperatur.

Durch die Festphasen-Maleinierung im Temperaturbereich von 60 bis 125 °C wird die für reaktive Extrusionsbedingungen charakteristische starke Degradation des Polypropylen-Rückgrats zwar deutlich zurückgedrängt, aber der Nachteil der in diesem Temperaturbereich durchgeführten Maleinierung besteht in der nur geringen Sorption des MSA durch das Polypropylenkorn, den langen Reaktionszeiten sowie den für die Abtrennung von nicht umgesetzten MSA ungünstigen Desorptionsbedingungen, die im Allgemeinen Temperaturen T_{Des} oberhalb der jeweiligen Reaktionstemperatur T_{R} erfordern (DD 275159, EP 0519341), weshalb eine zusätzliche Aufheizung des Produktes und dessen thermische Belastung notwendig ist.

Eine Verbesserung der MSA-Sorption und damit insgesamt höhere Maleinierungsgrade unter Bedingungen der Pfropfung in fester Phase im oben genannten Temperaturbereich sind sowohl durch Zusatz eines als Quellmittel fungierenden oberflächenaktiven Lösungsmittelanteils als auch von allyl-substituierten Cyanuraten und Isocyanuraten zum Polymerisationsansatz erreichbar (US 5079302). Diese Maßnahme führt jedoch zu einem unkontrolliert hohen vernetzten Polymeranteil und zu erheblichen Verunreinigungen.

Hohe MSA-Umsätze und Maleinierungsgrade sind auch durch Anwendung höherer Reaktionstemperatur □125 °C unter Verwendung peroxidischer Initiatoren erreichbar (WO 00/58379).

Der Nachteil der bekannten Festphasen-Maleinierung bei Reaktionstemperaturen oberhalb 125°C besteht aber im hohen Grad der Degradation des Molekulargewichts des Polypropylens, wodurch die Verwendungsmöglichkeit der maleinierten Polypropylene eingeschränkt ist.

Der vorliegenden Erfindung lag daher die Aufgabe zugrunde, ein Verfahren zu entwickeln, welches die angeführten Nachteile bekannter Verfahren, insbesondere die hohe Polypropylen-Degradation, vermeidet und mit dem modifizierte Polypropylene mit Maleinierungsgraden erhalten werden, die den universellen Einsatz der funktionalisierten Polypropylene als Kopplungsagens, Haft- und Verträglichkeitsvermittler gestatten.

Gegenstand der vorliegenden Erfindung ist demnach ein Verfahren zur Herstellung von durch MSA modifizierten Polypropylenen mit einem Maleinierungsgrad zwischen 0,1 und 5 Masse-%, gekennzeichnet dadurch, dass
A) eine Reaktionsmischung, bestehend aus
   - 60 bis 96 Masse-% partikelförmigem Polypropylen mit mittleren Teilchendurchmessern im Bereich von 0,01 bis 8 mm,
   - 2,5 bis 24,5 Masse-% MSA, gegebenenfalls als MSA/Comonomer-Mischung entsprechend einer Zusammensetzung 20 bis 95 Masseteile MSA/5 bis 80 Masseteile Comonomer, und
   - 1,5 bis 15,5 Masse-% eines organischen peroxidischen Radikalbildners mit einer Halbwertszeit zwischen 2 Minuten (min) und 150 min bei der gewählten Reaktionstemperatur (T_{R}), wobei das Masseverhältnis MSA/Radikalbildner zwischen 0,2 und 20, beträgt, bei einer Dispergiertemperatur (T_{D}) im Bereich zwischen Raumtemperatur (T_{N}) und 120 °C und einer Dispergierzeit (t_{D}) zwischen 1 und 60 min hergestellt,
B) die Mischung innerhalb einer Aufheizperiode zwischen 5 und 120 min von der Dispergiertemperatur T_{D} auf die Reaktionstemperatur T_{R} im Bereich zwischen 125 und 160 °C erwärmt,
C) MSA oder das MSA-Comonomer-Gemisch bei T_{R} zwischen 125 und 160 °C innerhalb einer Reaktionszeit t_{R} zwischen 5 min und 180 min unter Aufrechterhaltung einer festen (trockenen) Konsistenz der Reaktionsmischung umgesetzt und danach
D) aus der Reaktionsmischung mittels Durchleiten von Stickstoff über einen Zeitraum t_{Des} zwischen 10 min und 240 min bei einer Desorptionstemperatur T_{Des} zwischen der Reaktionstemperatur T_{R} und 80 °C der nicht umgesetzte Monomeranteil entfernt, der Restinitiator deaktiviert und nach Abkühlung auf eine Endtemperatur zwischen 100 °C und der Raumtemperatur T_{N} das trockene modifizierte Polypropylen dem Reaktionsgefäß entnommen wird.

Als zu modifizierende Polypropylene (Rückgratpolymere) werden insbesondere Homopolymere des Propylens (HPP) und/oder statistische (Random) Copolymere des Propylens mit 0,1 bis 8 Masse-% einpolymerisierten Ethylen- und/oder C₄- bis C₁₂-Olefineinheiten (RCP) und/oder heterophasige Propylencopolymere mit 6 bis 50 Masse-% einpolymerisierten Ethylen- und/oder C₄- bis C₁₂- Olefineinheiten (HCP) verwendet.

Die Rückgratpolymere sollten gewichtsmittlere Molekulargewichte M_{w} zwischen 50000 und 2000000 g/mol, vorzugsweise zwischen 100000 und 1000000 g/mol, und Schmelzflussraten MFR (230 °C/2,16 kg) zwischen 0,05 und 200 g/10 min, vorzugsweise zwischen 0,1 und 60 g/10 min (nach DIN-ISO 1133), besitzen und in pulveriger, flockiger, körniger, granularer oder anderer trocken-fließfähiger Konsistenz verwendet werden.

MSA fungiert als niedermolekulares Funktionalisierungsagens und wird bevorzugt ohne weiteren Comonomer-Zusatz eingesetzt.
Für eine Reihe von Anwendungsfällen der funktionalisierten Polypropylene haben sich "(Co)Pfropf-Anteile, zurückzuführen auf verwendete MSA/Comonomer-Mischungen in Zusammensetzungen zwischen 30-90 Masse-% MSA und 10-70 Masse-% Comonomer, zur Einstellung spezieller Modifikatoreigenschaften als vorteilhaft erwiesen. Als Comonomer sind unpolare Vinylaromate, insbesondere Styrol, und Ester der Acryl- oder Methacrylsäure, insbesondere Methylmethacrylat (MMA), bevorzugt.

Die radikalisch initiierte Modifizierungsreaktion wird zwecks Sicherung ausreichender Maleinierungsgrade sowie einer gleichmäßigen Pfropfung vorteilhaft in Gegenwart eines organischen peroxygruppenhaltigen Radikalbildners mit einer Halbwertszeit von 3 bis 120 min im Temperaturbereich zwischen 125 und 160 °C durchgeführt.

Ausgewählte Beispiele dafür sind tert.-Butylperoxybenzoat (tBPB) mit einer Halbwertstemperatur nach einer Stunde (gemessen als 0,1-molare Lösung in Benzol) T_{HW/1h} von 124 °C, Dicumylperoxid (DCUP) mit T_{HW/1h} von 136 °C, 2,5-Dimethyl-2,5-di(tert.-butylperoxy)hexan (DHBP) mit T_{HW/1h} von 142 °C, Di(tert.-butyl)peroxid (DtBP) mit T_{HW/1h} von 146 °C und 2,5-Dimethyl-2,5-di(tert.-butylperoxy)hexin-(3) (DYBP) mit T_{HW/1h} von 149 °C.

Die Angaben zur Polymerisationsmischung von 2,5 bis 24,5 Masse-% MSA und 1,5 bis 15,5 Masse-% Radikalbildner unterliegen noch der zusätzlichen Bedingung bezüglich des einzusetzenden MSA/Radikalbildner-Masseverhältnisses, welches vorzugsweise zwischen 0,5 und 10 zu wählen ist.

Der konkrete Einsatz des peroxidischen Radikalbildners, d. h. die Wahl in bezug auf seine chemische Struktur (auch unter Berücksichtigung möglicher Zerfallsprodukte sowie toxischer und Geruchsbelästigung), Halbwertszeiten und seine Konzentration, wird mit den jeweils aktuellen Reaktionsbedingungen, insbesondere T_{R}, t_{R}, MSA-Konzentration, Form der Monomer-Zugabe (batch- oder semibatch-Fahrweise), gegebenenfalls Zusätzen an Comonomeren sowie üblichen Additiven, insbesondere Wärme-, Licht- und UV-Stabilisatoren, Antioxidantien, Nukleierungsmittel usw., abgestimmt.

Die Herstellung der Reaktionsmischung, ihre Dispergierung und Aufheizung sind direkt im Reaktionsgefäß oder in einem geeigneten separaten Mischer bzw. in einer ähnlichen Vorrichtung durchführbar, wobei die Dispergierphase A), vorzugsweise zwischen 3 und 90 min, und die Aufheizphase B), vorzugsweise zwischen 10 und 120 min, zeitlich sich überschneiden bzw. teilweise oder insgesamt zusammenfallen können.

Die eigentliche Funktionalisierungsreaktion, d. h. die Umsetzung des MSA oder MSA/Comonomer-Gemisches, wird vorzugsweise bei einer Reaktionstemperatur T_{R} zwischen 140 und 155 °C in einer Reaktionszeit t_{R} zwischen 20 und 150 min durchgeführt.

Nach erfolgter Funktionalisierung wird unter Verwendung von vorzugsweisen Desorptionstemperaturen T_{Des} zwischen 150 und 100°C und vorzugsweisen Desorptionszeiten t_{Des} zwischen 25 und 150 min nicht umgesetztes MSA aus der Reaktionsmischung und gegebenenfalls noch enthaltendes Rest-Comonomer mittels üblicher Stickstoff-Spülung ausgetrieben und noch vorhandener Restinitiator deaktiviert

Dieses der vorliegenden Erfindung zugrunde liegende Fahrregime, bestehend aus
- Dispergier-Stufe bei Temperaturen T_{D}<125 °C, d. h. unterhalb T_{R},
- Reaktions-Stufe bei einer T_{R} oberhalb 125 °C (somit Gewährleistung einer hohen MSA-Sorptionskapazität auf/in dem festen Polypropylen) und
- Desorptions-Stufe bei T_{Des}, unterhalb der jeweils maximalen T_{R},
ist vorteilhaft für die Temperaturführung und den Ablauf des gesamten Prozesses sowie die schonende Behandlung des Reaktionsproduktes, insbesondere auf Grund der Vermeidung von Temperaturerhöhungen auf oberhalb T_{R} für die der Reaktion nachfolgende MSA-Rest-Entfernung und Initiatorrest-Deaktivierung.

Nach erfolgter MSA-Desorption und Initiatorrest-Deaktivierung wird das Reaktionsprodukt üblicherweise weiter auf eine Temperatur unterhalb 100 °C bis maximal auf Raumtemperatur T_{N} abgekühlt und dem Reaktor entnommen.

Der Vorteil der erfindungsgemäß maleinierten Propylenhomo- und -copolymere besteht in ihrem hohen Eigenschaftsniveau bei hohen Maleinierungsgraden, die sich in verbesserten mechanischen Kennwerten der mit ihnen modifizierten Polymerblends und -composites, insbesondere in hohen Schlag- und Kerbschlagzähigkeiten, Zugfestigkeiten und Elastizitätsmoduln widerspiegeln.

Dieses hohe Eigenschaftsniveau basiert einmal auf der Verhinderung der Polypropylen-Degradation, d. h., der Sicherung der hohen Molekulargewichte der eingesetzten Rückgratpolymere, und zum anderen auf der effektiven "Pfropf"-Struktur der erhaltenen maleinierten Polypropylene, charakterisiert durch eine sehr gleichmäßige Verteilung von an der Polypropylen-Stammkette angehängten ("aufgepfropften"), insbesondere monomolekularen Bernsteisäureanhydrid- und MSA-Gruppen bzw. - mittels spezifisch gewählter Comonomerkonzentrationen (Funktionsmonomer/ Co-monomer-Verhältnise) - durch gezielt einstellbare Längen der aufgepfropften Seitenketten (Pfropfreiser, Spacer).

Darüber hinaus besteht der Vorteil des erfindungsgemäßen Prozesses gegenüber den in der Schmelze durchgeführten Polypropylen-Funktionalisierungen generell in seiner hohen Wirtschaftlichkeit, die im Wesentlichen auf die Vermeidung von der bei den oberhalb des Polypropylen-Schmelzpunktes zu beobachtenden "Schädigung" der Rückgratpolymerstruktur zurückzuführen ist.

Im Vergleich zu den bei Reaktionstemperaturen oberhalb 125 °C bekannten, in der Festphase maleinierten Polypropylenen zeichnen sich die erfindungsgemäßen, analog modifizierten Polypropylene besonders durch ihre hohen Molekulargewichte aus. Die Gegenüberstellung der Schmelzflussraten (MFR) für die Polypropylene vor und nach ihrer Maleinierung weist keine sprunghaften MFR-Anstiege, Ausdruck einer typischen unkontrollierten Degradation im Unterschied zu einem gezielten begrenzten Molekulargewichtsabbau ("Controlled Rheology" Polypropylene, CR-PP), aus. Der MFR-Bereich der erfindungsgemäß maleinierten Polypropylene, der sich besonders durch die Wahl der Konzentration der Reaktionskomponenten sowie der Peroxid/ MSA (Comonomer)-Masse- bzw. Molverhältnisse steuern läßt, erstreckt sich gegenüber den Polypropylen-Ausgangswerten von etwa um eine Zehnerpotenz niedrigeren Werten über nahezu konstante bzw. nur geringfügig veränderte bis auf - entsprechend MFR (230 °C/2,16 kg) von maximal 60-80 g/10 min - angestiegene Werte. Bevorzugtes Ergebnis sind die mittels erfindungsgemäßem Verfahren erhaltenen maleinierten Polypropylene ohne MFR-Anstieg und solche generell mit MFR (230 °C /2,16 kg) □ 25 dg/min.

Die Vermeidung der Polypropylen-Degradation im erfindungsgemäßen T_{R}-Bereich zwischen 125 und 160 °C und damit die Sicherung eines hohen mechanischen Kennwertniveaus für die maleinierten Polypropylene selbst und besonders der mit ihnen modifizierten Polymer-Blends sowie Polymer-Composites war in keiner Weise vorherzusehen.

Deshalb sind die erfindungsgemäß durch MSA modifizierten Polypropylene mit Maleinierungsgraden zwischen 0,1 und 5 Masse-%, vorzugsweise zwischen 0,3 und 4 Masse-%, besonders als adhäsives Beschichtungsmaterial auf metallischen und anderen Oberflächen sowie als Verträglichkeitsverbesserer in Polymerverbunden, vorzugsweise als Phasenvermittler in Polymer-Blends oder als chemischer Koppler in Polymer-Composites, geeignet.

Die erfindungsgemäß modifizierten Polypropylene und das zu ihrer Herstellung verwendete Verfahren werden durch nachfolgende Beispiele erläutert, ohne darauf beschränkt zu sein.

### Beispiel 1

In einen temperierbaren und mit einem Rührer ausgerüsteten, vertikalen Reaktor (Länge/Durchmesser-Verhältnis: 2,5 zu 1) werden 100 Masseteile poröses körniges HPP mit einem mittlerer Teilchendurchmesser (dₖ) von 0,5 mm, M_{w} von 460000 g/mol, MFR (230 °C/10 kg) von 10,5 g/10 min und einem Schmelzpunkt von 162 °C vorgelegt. Anschließend werden 5 Masseteile MSA und 4 Masseteile Dicumylperoxid (DCUP) hinzugefügt und der Reaktor mittels Stickstoff sauerstofffrei gespült.

Nach 20-minütiger Dispergierung bei 60 °C unter Stickstoff-Atmosphäre wird der Reaktor mit einer Aufheizgeschwindigkeit von 1,9 °C/min auf T_{R} = 146 °C erhitzt. Danach wird die Reaktionsmischung unter Konstanthaltung der Reaktionstemperatur T_{R} von 146 °C gerührt (Drehzahl: 800 Umdrehungen/min).

Nach 65 min wird die Reaktion beendet, indem 40 Volumenanteile Stickstoff pro Reaktor-Volumenanteil und Stunde durch das Reaktionsprodukt geleitet werden. Nach einer Desorptionszeit t_{Des} von 105 min ist das Reaktionsprodukt auf 121 °C heruntergekühlt. Es wird dann nach weiterer Abkühlung auf etwa 50 °C dem Vorratsbehälter zugeführt, woraus es zur nachfolgenden Kennwertbestimmung entnommen wird.

Ermittelt werden:
- Ausbeute (Auswaage des Reaktionsproduktes)
- Gehalt an Carbonsäure (CS, berechnet auf Masse-% MSA) mittels Rücktitration der durch den Carbonsäureanteil nicht neutralisierten Kalilauge, indem eine 2 g-Probe der Ausbeute sechs Stunden mit einer Mischung aus 100 ml Xylol und 20 ml 0,1-molarer methanolischer Kalilauge bei 80 °C behandelt und nach Zugabe eines Tropfens Phenolphthalein mittels 0,1-molarer Salzsäure titriert wird:
   - für obengenannte Ausbeute der Masseanteil CS und
   - für den im siedenden Methanol erhaltenen Rückstand, d. h., den vom Polypropylen-Rückgrat chemisch gebundenen ("gepfropften") MSA-Masseanteil CSₑₓ, der sogenannte Funktionalisierungs- bzw. Maleinierungsgrad.

Außerdem sind bestimmt worden:
- der mittels Methanol bei Raumtemperatur T_{N} gelöste Anteil der Ausbeute, ein niedermolekulareres MSA-Peroxid-Reaktionsprodukt PMSA, und
- der mittels siedendem Methanol aus dem Extrakt ermittelte Anteil an oligomeren MSA-Peroxid-Reaktionsprodukt PMSAₑₓ.
- MFR-Werte entsprechend DIN-ISO 1133 (bei 230 °C; 2,16 kg bzw. 10 kg Auflagegewicht)
- Gelgehalt m_{Gel} (der in siedendem Xylol nach 6 Stunden unter Rückfluss erhaltene unlösliche Anteil der Ausbeute) als Maß für den "vernetzten" Anteil im maleinierten Polypropylen.

### Kennwerte für das maleinierte Polypropylen (Beispiel-Nr. 1):

| | |
|---|---|
| Ausbeute | 105,5 Masseteile |
| | (61,1 %, bezogen auf eingesetztes MSA und DCUP) |
| Carbonsäuregehalt CS | 1,41 Masse-% |
| Maleinierungsgrad CSₑₓ | 1,11 Masse-% |
| PMSA-Anteil | 0,24 Masse-% |
| PMSAₑₓ-Anteil | 0,22 Masse-% |
| m_{Ge}) | 4 Masse-% |
| MFR (230/2,16) | 0,21 g/10 min |
| MFR (230/10) | 4,5 g/10 min |

### Beispiele 2 bis 20

Entsprechend der in Beispiel 1 beschriebenen Prozessführung werden unter Verwendung verschiedener Polypropylen-Substrate, peroxidischer Initiatoren sowie gegebenenfalls unter Zusatz von Styrol (St) oder Methylmethacrylat (MMA) als Comonomer weitere erfindungsgemäße maleinierte Polypropylene hergestellt. Dabei werden sowohl die Monomer- und Initiatorkonzentrationen als auch die Reaktionsbedingungen und das Fahrregime (Dispergierung, Aufheizung, Reaktion, Aufarbeitung), einschließlich Form der Zugabe der Reaktionskomponenten (einmalige Vorlage aller Reaktionskomponenten: Chargen- Fahrweise; Nachdosierung von MSA und Initiator: semibatch-Fahrweise) variiert.

### Verwendet werden nachfolgende Reaktionskomponenten:

### Polypropylen-Substrate:

- oben genanntes HPP mit M_{w}=460000 g/mol und MFR(230/2,16)=0,5 g/10 min (HPP-0,5 in den Beispielen 2-11)
- pulverförmiges HPP mit M_{w}= 154000 g/mol und MFR(230/2,16)=18 g/10 min (HPP-18 in den Beispielen 12-16)
- pulverförmiges HCP (12 Masse-% eingebaute C₂-Einheiten) mit dₖ≈0,3mm und MFR(230/2,16)=18 g/10 min (HCP in Beispielen 17-20)

### Monomere:

- MSA (2 bis 11 Masse-%, bezogen auf vorgelegtes Polypropylen), Chargen- und semibatch-Technologie (letztere in Beispielen Nr. 7 und 16)
- Styrol (3 und 4,5 Masse-%) und MMA (4 Masse-%)

### Peroxide:

- DCUP (1-8 Masse-%), Chargen- und semibatch-Technologie
- DHEP (2,3; 4 und 8 Masse-%) und DYBP (4 Masse-%)

### MSA/Peroxid-Masseverhältnis: 0,625 bis 5

In Tabelle 1 sind als Verfahrensparameter aufgeführt:
- verwendetes Polypropylen-Rückgrat (Spalte 1)
- Peroxidart und -konzentration in Masse-% (Spalten 2 und 3)
- MSA-Konzentration in Masse-% (Spalte 4)
- St- und MMA-Konzentration in Masse-% (Spalte 5)
- Aufheizzeit (t_{A}) in min (Spalte 6)
- Reaktionstemperatur (T_{R}) in °C und Reaktionszeit (t_{R}) in min
(Spalten 7 und 8)
- Desorptionszeit (t_{Des}) in min (Spalte 9)

Entsprechend Beispiel 1 sind folgende Prozeßstufen übernommen worden:
(A) 20 min Dispergierung der Reaktionsmischung bei T_{D}= (60±20) °C
(B) Aufheizung von T_{D}= (60±20) °C auf T_{R}
(C) Chargen-Fahrweise, Ausnahme Beispiele 7 und 16, wo gleiche Mengen MSA und Peroxid zweimal bzw. im Beispiel 18 einmal nachdosiert worden sind
(D) Beendigung der Desorption (Einstellung des Durchleitens von N₂ durch das Produkt) nach erreichter Reaktionsprodukt-Temperatur von (100±20) °C.

Zum Vergleich ist in Tabelle 1 die Herstellung von vier modifizierten Polypropylenen (Vgl.1A, Vgl.1 B, Vgl.12 und Vgl.17), maleiniert mittels Festphasenpfropfung bei T_{Pm} > 125 °C unter Verwendung der gleichen Reaktionskomponenten (Polypropylen-Substrat, MSA, DCUP), aber außerhalb der beanspruchten Bereiche für die verwendete Monomer- und Initiatorkonzentration liegend, mitangeführt.

**Tabelle 1**

| Bspl.-Nr. | Init.-Art | Initiator Ma.-%. | MSA Ma.-% | St/MMA Ma.-% | t_{A} [min] | T_{R} [°C] | t_{R} [min] | t_{Des} [min] |
|---|---|---|---|---|---|---|---|---|
| 1 HPP0,5 | DCUP | 4 | 5 | - | 55 | 146 | 65 | 105 |
| Vgl. 1A | DCUP | 1 | 2,4 | - | 50 | 135 | 150 | 120 |
| Vgl.1B | DCUP | 1,3 | 2 | - | 15 | 145 | 120 | 90 |
| 2 HPP0,5 | DCUP | 4 | 10 | - | 50 | 145 | 120 | 120 |
| 3 HPP0,5 | DCUP | 8 | 5 | - | 85 | 147 | -90 | 105 |
| 4 HPP0,5 | DCUP | 8 | 6,7 | - | 20 | 150 | 60 | 120 |
| 5 HPP0,5 | DCUP | 4 | 6,7 | - | 55 | 145 | 120 | 180 |
| 6 HPP0,5 | DCUP | 2 | 10 | - | 50 | 148 | 120 | 180 |
| 7 HPP0,5 | DCUP | 2,3 | 3 + 2x3 | - | 90 | 145 | 180 | 120 |
| semibatch | | Σ6,9 | Σ9 | | | | | |
| 8 HPP0,5 | DCUP | 2 | 6,7 | - | 45 | 145 | 120 | 120 |
| 9 HPP0,5 | DCUP | 4 | 5,5 | 4,5 St | 60 | 147 | 60 | 120 |
| 10HPP0,5 | DHEP | 8 | 5 | 3 St | 55 | 145 | 60 | 100 |
| 11HPP0,5 | DYBP | 8 | 6,7 | 4 MMA | 30 | 145 | 90 | 100 |
| 12HPP18 | DCUP | 4 | 3 | - | 30 | 147 | 60 | 105 |
| Vgl. 12 | DCUP | 1,2 | 2,4 | - | 30 | 135 | 60 | 105 |
| 13 HPP18 | DCUP | 2,3 | 3 | - | 45 | 149 | 60 | 120 |
| 14 HPP18 | DCUP | 2,3 | 6,7 | - | 40 | 151 | 65 | 120 |
| 15 HPP18 | DHEP | 2,3 | 3 | - | 25 | 149 | 70 | 120 |
| 16 HPP18 | DCUP | 4 + 2x2 | 5 + 2x3 | - | 60 | 149 | 120 | 120 |
| semibatch | | Σ8 | Σ11 | | | | | |
| 17 HCP | DCUP | 8 | 5 | - | 45 | 148 | 75 | 120 |
| Vgl.17 | DCUP | 1 | 2 | - | 50 | 145 | 75 | 120 |
| 18 HCP | DCUP | 8 | 5 | - | 110 | 147 | 60 + | 105 + |
| 2 Stufen | | 8 | 5 | - | 110 | 148 | 60 | 120 |
| 19HCP | DHEP | 4 | 5 | - | 105 | 149 | 60 | 120 |
| 20 HCP | DYBP | 4 | 6,7 | - | 20 | 150 | 60 | 120 |

**Tabelle 2**

| Bspl.-Nr. | MFR [g/10 min] | | [CS] | [CSₑₓ] | [PMSAₑₓ] | m_{Gel} |
|---|---|---|---|---|---|---|
| | 230/2,16 | 230/10 | [Masse-%] | [Masse-%] | [Masse-%] | [Masse-%] |
| 1 HPP 0,5 | 0,21 | 4,5 | 1,41 | 1,11 | 0,27 | 4 |
| Vgl.1A | 120 | | 0,85 | 0,68 | 0,21 | 1 |
| Vgl.1 B | läuft durch | | 0,76 | 0,65 | 0,09 | 11 |
| 2 HPP 0,5 | 1,9 | | 2,77 | 1,91 | 0,64 | 2 |
| 3 HPP 0,5 | n.m.* | 0,7 | 1,91 | 1,47 | 0,27 | 24 |
| 4 HPP 0,5 | 0,35 | 6,0 | 2,48 | 2,33 | 0,24 | 2 |
| 5 HPP 0,5 | 7,5 | | 1,36 | 1,31 | 0,10 | 2 |
| 6 HPP 0,5 | 1,5 | | 2,98 | 1,92 | 0,37 | 3 |
| 7 HPP 0,5 | 0,3 | | 4,62 | 3,40 | 0,76 | 4 |
| 8 HPP 0,5 | 1,0 | | 1,19 | 0,84 | 0,27 | 3 |
| 9 HPP 0,5 | 66 | | 2,25 | 1,87 | 0,10 | 8 |
| 10 HPP 0,5 | 1 | | 3,21 | 2,62 | 0,36 | 0 |
| 11 HPP 0,5 | 5,3 | | 3,73 | 2,92 | 0,54 | 1 |
| 12 HPP 18 | 39 | | 1,36 | 1,23 | 0,09 | 2 |
| Vgl.12 | läuft durch | | 0,75 | 0,60 | 0,13 | 2 |
| 13 HPP 18 | 17 | | 1,07 | 0,96 | 0,06 | 3 |
| 14 HPP 18 | 3,3 | | 2,53 | 1,87 | 0,45 | 7 |
| 15 HPP 18 | 25 | | 1,26 | 0,86 | 0,27 | 2 |
| 16 HPP 18 | 2,8 | | 5,12 | 4,20 | 0,65 | 8 |
| 17 HCP | 80 | | 2,32 | 1,84 | 0,34 | 2 |
| Vgl. 17 | läuft durch | | 0,75 | 0,65 | 0,07 | 1 |
| 18 HCP | 17 | | 2,07 | 1,68 | 0,31 | 2 |
| | 4,1 | | 3,55 | 2,52 | 0,82 | 4 |
| 19 HCP | 43 | | 2,09 | 1,49 | 0,70 | 3 |
| 20 HCP | 21 | | 2,60 | 1,94 | 0,54 | 5 |

| | | | | | | |
|---|---|---|---|---|---|---|
| *n.m. nicht messbar | | | | | | |

In Tabelle 2 sind die für die Bewertung der Reaktionsprodukte als Modifikatoren in Polymer-Blends und/oder Polymer-Composites sowie für den Direkteinsatz als Beschichtungsmaterial bzw. Adhesive wichtigen Kennwerte aufgeführt:
- MFR (230 °C/2,16 kg) bzw. MFR (230 °C/10 kg) in g/10 min (Spalte 2)
- umgesetzter MSA-Anteil CS und chemisch gebundener ("gepfropfter") MSA-Anteil im Extraktionsrückstand CSₑₓ, in Masse-% (Spalten 3 und 4)
- extrahierter (gelöster) "Homo-Oligomer"-Anteil PMSAₑₓ in Masse-% (Spalte 5) und
- Gelgehalt m_{Gel} in Masse-%, bezogen auf die Ausbeute (Spalte 6)

Die Ergebnisse zeigen, dass die mittels erfindungsgemäßen Polymerisationsbedingungen modifizierten Polypropylene hohe Maleinierungsgrade zwischen 0,84 und 4,2 Masse-% aufweisen und generell nicht degradiert sind. Die für die erfindungsgemäß maleinierten Polypropylene ermittelten MFR-Werte bleiben nahezu konstant oder weisen entweder eine Erniedrigung oder eine - im Vergleich zu unkontrolliert degradierten maleinierten Polypropylenen - vertretbare Erhöhung auf (insbesondere Beispiele 9, 12, 17 und 19 mit MFR > 25 g/10 min entsprechend einem gezielt einstellbarem Molmasseabbau).

Durch Wahl der konkreten Prozessparameter (Temperatur/Zeit-Regime, beanspruchte Initiator-/MSA-Konzentration, gegebenenfalls Comonomeranteil, unter Berücksichtigung des gewählten MSA/Initiator-Masseverhältnisses) sind spezifische Produktkennwerte, gegebenenfalls auch entsprechend o. a. vier Beispielen für CR-PP übliche höhere MFR-Werte, einstellbar.
Im Unterschied dazu sind die mittels außerhalb der beanspruchten MSA- und Initiatorkonzentrationen - entsprechend den Vergleichsbeispielen (Vgl.1 A, Vgl.1 B, Vgl.12 und Vgl.17)- hergestellten modifizierten Polypropylene im hohen Maße degradiert.

## Patentansprüche

1. Verfahren zur Herstellung von durch Maleinsäureanhydrid (MSA) modifizierten Polypropylenen mit einem Maleinierungsgrad zwischen 0,1 und 5 Masse-%, **dadurch gekennzeichnet, dass**
(A) eine Reaktionsmischung, bestehend aus
• 60 bis 96 Masse-% partikelförmigem Polypropylen mit mittleren Teilchendurchmessern im Bereich von 0,01 bis 8 mm.
• 2,5 bis 24,5 Masse-% MSA, gegebenenfalls als MSA/Comonomer-Mischung entsprechend einer Zusammensetzung 20 bis 95 Masseteile MSA/5 bis 80 Masseteile Comonomer, und
• 1,5 bis 15,5 Masse-% eines organischen peroxidischen Radikalbildners mit einer Halbwertszeit zwischen 2 Minuten (min) und 150 min bei der gewählten Reaktionstemperatur (T_{R}), wobei das Masseverhältnis MSA/Radikalbildner zwischen 0,2 und 20 beträgt, bei einer Dispergiertemperatur (T_{D}) im Bereich zwischen Raumtemperatur (T_{N}) und 120 °C und einer Dispergierzeit (t_{D}) zwischen 1 und 60 min hergestellt,
(B) die Mischung innerhalb einer Aufheizperiode zwischen 5 und 120 min von der Dispergiertemperatur T_{D} auf die Reaktionstemperatur T_{R} im Bereich zwischen 125 und 160 °C erwärmt,
(C) MSA oder das MSA-Comonomer-Gemisch bei T_{R} zwischen 125 und 160 °C innerhalb einer Reaktionszeit t_{R} zwischen 5 und 180 min unter Aufrechterhaltung einer festen (trockenen) Konsistenz der Reaktionsmischung umgesetzt und danach
(D) aus der Reaktionsmischung mittels Durchleiten von Stickstoff über einen Zeitraum t_{Des} zwischen 10 und 240 min bei einer Desorptionstemperatur T_{Des} zwischen der Reaktionstemperatur T_{R} und 80 °C der nicht umgesetzte Monomeranteil entfernt, der Restinitiator deaktiviert und nach Abkühlung auf eine Endtemperatur zwischen 100 °C und der Raumtemperatur T_{N} das trockene modifizierte Polypropylen dem Reaktionsgefäß entnommen wird.

2. Verfahren nach Anspruch 1, **dadurch gekennzeichnet, dass** als zu modifizierende Polypropylene Homopolymere des Propylens (HPP)-und/oder statistische (Random) Copolymere des Propylens mit 0,1 bis 8 Masse-% einpolymerisierten Ethylen- und/oder C₄- bis C₁₂-Olefineinheiten (RCP) und/oder heterophasige Propylencopolymere mit 6 bis 50 Masse-% einpolymerisierten Ethylen-und/oder C₄₋ bis C₁₂-Olefineinheiten (HCP) jeweils mit gewichtsmittleren Molekulargewichten M_{w} zwischen 50000 und 2000000 g/mol, vorzugsweise zwischen 100000 und 1000000 g/mol, und Schmelzflussraten MFR (230°C/2, 16 kg) zwischen 0,05 und 200 g/10 min, vorzugsweise zwischen 0,1 und 60 g/10 min (nach DIN-ISO 1133), in pulveriger, flockiger, körniger, granularer oder anderer trocken-fließfähiger Konsistenz eingesetzt werden.

3. Verfahren nach den Ansprüchen 1 oder 2, **dadurch gekennzeichnet, dass** bei Einsatz von MSA/Comonomer-Mischungen solche unter Verwendung unpolarer Vinylaromate, vorzugsweise Styrol, und (Meth-)Acrylsäureester, vorzugsweise Methylmethacrylat, als Comonomer in Zusammensetzungen zwischen 30 bis 90 Masse-% MSA und 10 bis 70 Masse-% Comonomer eingesetzt werden.

4. Verfahren nach einem oder mehreren der Ansprüche 1 bis 3, **dadurch gekennzeichnet, dass** peroxidische Initiatoren mit einer Halbwertszeit von 3 bis 120 Minuten im Temperaturbereich zwischen 125 und 160 °C verwendet werden.

5. Verfahren nach einem oder mehreren der Ansprüche 1 bis 4, **dadurch gekennzeichnet, dass** der Initiator unter tert.-Butylperoxybenzoat, Dicumylperoxid, 2,5-Dimethyl-2,5-di(tert.-butylperoxy)hexan, Di(tert.-butyl)peroxid und 2,5-Dimethyl-2,5-di(tert.-butylperoxy)hexin-(3) ausgewählt wird.

6. Verfahren nach einem oder mehreren der Ansprüche 1 bis 5, **dadurch gekennzeichnet, dass** ein Masseverhältnis Funktionsmonomer zu Initiator zwischen 0,5 und 10 gewählt wird.

7. Verfahren nach einem oder mehreren der Ansprüche 1 bis 6, **dadurch gekennzeichnet, dass** die Herstellung der Reaktionsmischung, ihre Dispergierung und Aufheizung direkt im Reaktionsgefäß oder in einem geeigneten separaten Mischer durchgeführt wird, wobei die Dispergierphase A) und Aufheizphase B) zeitlich sich überschneiden bzw. teilweise oder insgesamt zusammenfallen können.

8. Verfahren nach einem oder mehreren der Ansprüche 1 bis 7, **dadurch gekennzeichnet, dass** die radikalische Umsetzung (Polymerisation) des MSA oder MSA/Comonomer-Gemisches bei einer Reaktionstemperatur T_{R} zwischen 140 und 155 °C und bei einer Reaktionszeit t_{R} zwischen 20 und 150 min durchgeführt wird.

9. Verfahren nach einem oder mehreren der Ansprüche 1 bis 8, **dadurch gekennzeichnet, dass** unter Verwendung von Desorptionstemperaturen T_{Des} zwischen 150 und 100 °C und Desorptionszeiten t_{Des} zwischen 25 und 150 min aus der Reaktionsmischung nicht umgesetztes MSA und gegebenenfalls noch enthaltendes Rest-Comonomer mittels Stickstoff-Spülung ausgetrieben und noch vorhandener Restinitiator deaktiviert wird.

## Claims

1. A method for producing polypropylenes modified by maleic anhydride (MA) with a maleation degree in the rage between 0.1 and 5 % by weight which involves
A) making a reaction mixture comprising
• 60 to 96 % by weight of particulate polypropylene having average particle diameters ranging from 0.01 to 8 mm,
• 2.5 to 24.5 % by weight of MA, optionally as MA/comonomer mixture corresponding to a composition of 20 to 95 parts by weight of MA/5 to 80 parts by weight of comonomer, and
• 1.5 to 15.5 % by weight of an organic peroxide radical initiator with a half-life between 2 and 150 minutes (min) at the selected reaction temperature (T_{R}), using a weight ratio of MA/peroxide initiator between 0.2 and 20, at a dispersion temperature (T_{D}) between room temperature (T_{N}) and 120 °C and a dispersion time (t_{D}) between 1 and 60 min,
(B) heating the mixture for 5 to 120 min from the dispersion temperature T_{D} to the reaction temperature T_{R} ranging between 125 and 160 °C,
(C) reacting the MA or the MA/comonomer mixture at T_{R} between 125 and 160 °C for a reaction time t_{R} between 5 and 180 min maintaining the solid (dry) consistency of the reaction mixture and then,
(D) removing the amount of unreacted monomer from the reaction mixture by passing nitrogen through the mixture for a period t_{Des} between 10 and 240 min at a desorption temperature T_{DES} being between the reaction temperature T_{R} and 80 °C, deactivating the residual initiator and discharging the dried modified polypropylene from the reaction vessel after cooling to a final temperature between 100 °C and room temperature T_{N}.

2. A method according to claim 1 **characterised in that** powdery, flaky, granular or other free-flowing particulate propylene homopolymers (HPP) and/or random propylene copolymers containing 0.1 to 8 % by weight ethylene and/or C₄- to C₁₂-olefin units (RCP) and/or heterophase propylene copolymers containing 6 to 50 % by weight of ethylene and/or C₄-to C-₁₂ olefin units (HCP), each having weight average molecular weights M_{w} between 50000 and 2000000 g/mol, preferably between 100000 and 1000000 g/mol, and melting flow rates MFR (230°C/2.16kg) between 0.05 and 200 g/10 min, preferably between 0.1 and 60 g/10 min (according to DIN-ISO 1133), are used as polypropylenes to be modified.

3. A method according to claims 1 and 2 **characterised in that**, when using MA/comonomer mixtures nonpolar vinylaromatic compounds, preferably styrene, and (meth)acrylic-acid esters, preferably methyl methacrylate, are used as comonomer in compositions between 30 and 90 % by weight MA and between 10 and 70 % by weight comonomer.

4. A method according to one ore more out of claims 1 through to and including 3, **characterised in that** peroxide initiators with a half-life of 3 to 120 minutes are used in a temperature range between 125 and 160 °C.

5. A method according to one ore more out of claims 1 through to and including 4, **characterised in that** the initiator is selected from the group consisting of tert.-butyl peroxybenzoate, dicumyl peroxide, 2.5-dimethyl-2.5-di(tert.-butylperoxy)hexane, di-tert.butyl-peroxide and 2.5-dimethyl-2,5-di(tert.-butylperoxy)hexin-(3).

6. A method according to one ore more out of claims 1 through to and including 5, **characterised in that** a weight ratio of functional monomer to initiator between 0.5 and 10 is selected.

7. A method according to one ore more out of claims 1 through to and including 6, **characterised in that** the preparation of the reaction mixture, its dispersion and its heating up are carried out directly in the reaction vessel or in a suitable separate mixer, wherein the dispersion phase A) and the heating up phase B) are able to overlap in time or partly or wholly coincide.

8. A method according to one ore more out of claims 1 through to and including 7, **characterised in that** the radical conversion (polymerisation) of the MA or MA/comonomer mixture is carried out at a reaction temperature T_{R} between 140 and 155 °C and at a reaction time t_{R} between 20 and 150 min.

9. A method according to one ore more out of claims 1 through to and including 8, **characterised in that** the unreacted MA and optionally residues of comonomer are stripped off the reaction mixture by nitrogen scavenging and possible residues of the initiator are deactivated using desorption temperatures T_{DES} between 150 and 100 °C and desorption times t_{DES} between 25 and 150 min.

## Revendications

1. procédé pour préparer des polypropylènes modifiés par l'anhydride de l'acide maléique avec un degré de maléination entre 0,1 et 5 % en poids **caractérisé par le fait qu'**est produit
A) un mélange de réaction, constitué
■ de 60 à 96 % en poids de polypropylène sous forme de particules aux diamètres moyens des particules allant de 0,01 jusqu'à 8 mm,
■ de 2,5 à 24,5 % en poids d'anhydride maléique, le cas échéant comme mélange anhydride maléique/comonomère conformément à une constitution de 20 à 95 parts en poids d'anhydride maléique et de 5 à 80 parts en poids de comonomère et
■ de 1,5 à 15,5 % en poids d'un générateur de radicaux organique aux peroxydes au temps de demi-réaction allant de 2 minutes (min) à 150 min par la température de réaction choisie (T_{R}), le rapport de poids d'anhydride maléique/générateur de radicaux allant de 0,2 à 20, par une température de dispersion (T_{D}) dans le domaine allant de la température ambiante (T_{N}) jusqu'à 120 °C et par un temps de dispersion (t_{D}) allant de 1 à 60 min,
B) que le mélange est réchauffé pendant une période de chauffage durant 5 à 120 min, de la température de dispersion T_{D} à la température de réaction T_{R} dans le domaine de 125 à 160 °C,
C) que l'anhydride maléique ou le mélange d'anhydride maléiquecomonomère est transformé sous T_{R} de 125 à 160 °C pendant un temps de réaction t_{R} durant 5 à 180 min sous le maintien d'une consistance solide (sèche) du mélange de réaction et qu'après
D) partant du mélange de réaction, en faisant passer de l'azote durant une période t_{Des} de 10 à 240 min la part de monomère non transformé est éloignée par une température de désorption T_{Des} située entre la température de réaction T_{R} et 80 °C, l'initiateur restant est désactivé et qu'après le refroidissement à une température finale entre 100 °C et la température ambiante T_{N} le polypropylène sec modifié est soutiré du récipient de réaction.

2. Procédé selon la revendication 1, **caractérisé par le fait que** sont utilisés comme polypropylènes à modifier des homo-polymères du propylène (HPP) et/ou des copolymères statistiques (random) du propylène avec 0,1 jusqu'à 8 % en poids d'unités d'éthylène et/ou d'unités d'oléfines de C₄ à C₁₂ (RCP) fixées par polymérisation et/ou de copolymères de propylène hétérophasiques avec 6 jusqu'à 50% en poids d'unités d'éthylène et/ou d'unités d'oléfines de C₄ à C₁₂ (HCP) fixées par polymérisation chacune avec des poids moléculaires de poids moyen M_{w} de 50 000 à 2 000 000 g/mol, de préférence de 100 000 à 1 000 000 g/mol et des taux de fluage MFR (230°C/2,16 kg) de 0,05 à 200 g/10 min, de préférence de 0,1 et 60 g/10 min (d'après DIN-ISO 1133) en consistance pulvérulente, floculeuse, grenue, granulaire ou d'une autre consistance sèche-ruisselante.

3. Procédé selon les revendications 1 et 2, **caractérisé par le fait qu'**en employant des mélanges d'anhydride maléique/comonomère sont utilisés ceux qui sous l'application d'aromates de vinyle non-polaires, de préférence du styrène et de l'ester d'acide (méth) acrylique, de préférence du méthacrylate de méthyle, comme comonomère en compositions de 30 à 90% en poids d'anhydride maléique et de 10 à 70% en poids de comonomère.

4. Procédé selon une ou plusieurs des revendications de 1 à 3 **caractérisé par le fait que** sont utilisés des initiateurs aux peroxydes avec un temps de demi-réaction de 3 jusqu'à 120 minutes dans la gamme de température de 125 à 160 °C.

5. Procédé selon une ou plusieurs des revendications dé 1 à 4 **caractérisé par le fait que** l'initiateur a été choisi parmi le butylperoxybenzoate tertiaire, le peroxyde de dicumyl, le 2,5-diméthyl-2,5-di(tert-butylperoxy)hexane, le di(tert-butyl)peroxyde et la 2,5-diméthyl-2,5-di(tert-butylperoxy)hexine-(3).

6. Procédé selon une ou plusieurs des revendications de 1 à 5 **caractérisé par le fait qu'**un rapport de poids du monomère fonctionnel envers l'initiateur sera choisi entre 0,5 et 10.

7. Procédé selon une ou plusieurs des revendications de 1 à 6 **caractérisé par le fait que** la préparation du mélange de réaction, sa dispersion et son chauffage se font directement dans le récipient de réaction ou dans un malaxeur séparé approprié, la phase de dispersion A) et la phase de chauffage B) pouvant se chevaucher dans le temps ou se recouvrir dans l'ensemble.

8. Procédé selon une ou plusieurs des revendications de 1 à 7 **caractérisé par le fait que** la transformation radicalaire (polymérisation) de l'anhydride maléique ou du mélange d'anhydride maléique et de comonomère est effectuée par une température de réaction T_{R} de 140 à 155 °C et sous un temps de réaction t_{R} de 20 à 150 min.

9. Procédé selon une ou plusieurs des revendications de 1 à 8 **caractérisé par le fait que** sous l'emploi de températures de désorption T_{Des} de 150 à 100 °C et des temps de désorption t_{Des} de 25 à 150 min l'anhydride maléique non transformée et les restes de comonomère éventuellement encore contenus sont évacués au moyen d'un rinçage à l'azote et que le reste d'initiateur encore existant est désactivé.
